# FASCICULE DE BREVET EUROPEEN

(11) **EP 2 431 571 B1**
(45) Date de publication et mention de la délivrance du brevet: **05.06.2013**
(21) Numéro de dépôt: 10009660.1
(22) Date de dépôt: 16.09.2010
(51) Int. Cl.: F01D 5/28, F01D 9/04, F01D 25/24, F04D 29/02

(54) **Assemblage d'un aube et d'un support composite par scellage**
Montageverbund durch Auflagerung aus Laufradschaufel und Träger
Assembly of a blade and a composite support by secure fixing

(43) Date de publication de la demande: 21.03.2012
(73) Titulaire: Techspace Aero S.A., 4041 Milmort (BE)
(72) Inventeur: Renard, Philippe, 73100 Aix Les Bains (FR); Grelin, Hervé, 89340 Villeblevin (FR); Berard, Sacha, 4020 Liege (BE)
(74) Mandataire: Lerho, Marc J. A.

(56) Documents cités:
- EP-A1- 0 433 111
- EP-A1- 1 493 901
- EP-A2- 1 081 335
- DE-A1-102009 010 613
- US-A1- 2009 232 647

## Description

### Objet de l'invention

La présente invention se rapporte au domaine technique des assemblages dans le secteur aéronautique, notamment dans les redresseurs de compresseur de turbomachine. En particulier, l'invention se rapporte à un (étage de) redresseur de compresseur de turbomachine constitué de pièces en composite à matrice organique et constitué d'au moins un sous-ensemble d'aubages intégrant un assemblage mécanique réalisé par scellage.

Dans le contexte de la présente invention, on entend par scellage l'opération de fixer une pièce dans un support à l'aide d'un élément polymérique chargé ou non par blocage mécanique et/ou par interaction physico-chimique avec le support et/ou la pièce à fixer.

### Arrière-plan technologique et état de la technique

Dans la technique actuelle, il n'existe pas de redresseurs de compresseur de turbomachine en matériau composite, mais uniquement en matériau métallique, par exemple en titane (TA6V), acier ou aluminium.

D'autre part, les aubes sont généralement de matière et de profil unique sur un même étage, avec éventuellement une faible variation de l'angle de calage pour des raisons aérodynamiques sur le dernier étage.

Enfin, les systèmes actuels reposent sur une virole extérieure, faisant office de carter et qui assure l'essentiel des fonctions mécaniques, sur des aubes rapportées à une première extrémité sur ces viroles extérieures par diverses technologies d'assemblage (soudure, rivetage, boulonnage) et sur des viroles intérieures relativement souples attachées aux aubes à une seconde extrémité mais n'assurant pas de fonction structurale.

Aujourd'hui, un des problèmes majeurs de l'utilisation de pièces composites réside dans leur interface avec l'extérieur. L'invention propose une solution d'assemblage pour des pièces de nature variée : soit hybride "métallique/composite" ou encore "composite/composite", tout en utilisant le moins de moyens de fixation métalliques possible, ces derniers générant de nombreuses problématiques (masse, dilatation différentielle, etc.).

Le document FR 1 431 558 divulgue une structure à aubes comportant un carter et deux enveloppes concentriques, une enveloppe extérieure et une enveloppe intérieure, cette dernière étant décalée de l'enveloppe extérieure par des moyens d'écartement. Les aubes sont montées serrées dans des ajours aménagés en vis-à-vis dans les deux enveloppes. Les aubes peuvent être soudées, collées ou fixées sur l'enveloppe extérieure, qui est montée serrée dans un carter extérieur. En particulier, toutes ces pièces de la structure à aubes peuvent être en résine synthétique et collées les une sur les autres. Les aubes peuvent également être en métal et soudées sur le carter extérieur.

Le document EP 1 493 901 A1 divulgue un redresseur de compresseur de moteur aéronautiques où les aubes s'étendant radialement de la virole intérieure à la virole extérieure sont fixées à la virole intérieure au moyen d'un ciment étanche contenant un adhésif polymère organique à base de polyimide.

Le document EP 1 081 335 A2 divulgue une méthode pour joindre un élastomère à un substrat thermoplastique et, plus particulièrement, pour lier un joint d'étanchéité de virole intérieure à un épaulement interne adapté pour engager des aubes statoriques. Le joint en élastomère est lié à l'épaulement en matériau thermoplastique à l'aide d'adhésifs.

Le document DE 10 2009 010 613 A1 divulgue une méthode pour fixer une bande composite aux extrémités d'aubes d'un étage de turbine. La bande est constituée d'un matériau fibreux qui est enroulé sur les extrémités libres des aubes, une matrice est alors infiltrée dans le matériau fibreux et l'ensemble est ensuite polymérisé.

### Buts de l'invention

La présente invention vise à s'affranchir des inconvénients de l'état de la technique. L'invention est définie par la revendication 1.

En particulier, l'invention a pour but de permettre la fabrication de redresseurs aubagés à faible masse et faible coût pour tous compresseurs dont le rotor est constitué de disques, d'un tambour ou autres.

L'invention a encore pour but de permettre l'assemblage facile d'aubages de redresseurs de propriétés diverses, afin d'en optimiser au mieux la tenue mécanique ainsi que les coûts.

L'invention a encore pour but de permettre au redresseur d'être monté et démonté facilement, en favorisant ainsi les aspects d'entretien en service tout en limitant le nombre d'éléments de fixation métalliques.

L'invention a encore comme but de gagner du temps lors du montage du compresseur.
- la pièce à fixer est une aube ;
- la pièce à fixer possède une extrémité (ou pied) dont la géométrie permet d'optimiser la liaison mécanique ;
- la pièce à fixer possède une géométrie en pied ;
- le logement à paroi CMO est un support profilé, de préférence en « U » ;
- la matrice organique du logement est en matière thermoplastique ou thermodurcissable ;
- la matière du logement à paroi CMO et celle du composite de scellage sont identiques ou compatibles chimiquement, afin de réaliser une accroche chimique ou physico-chimique entre celles-ci ;
- le logement à paroi CMO thermodurcissable ou thermoplastique est fabriqué par un procédé sélectionné dans le groupe constitué de compression molding, d'injection de matrice thermoplastique ou thermodurcissable, de thermoformage et de co-consolidation ;
- le composite de scellage à injecter est réalisé par un procédé sélectionné dans le groupe constitué d'injection de matrice thermoplastique ou thermodurcissable chargée ou non chargée et de compression molding.

Un deuxième objet de la présente invention se rapporte à un étage de redresseur pour compresseur de turbomachine comprenant un assemblage mécanique d'une pluralité d'aubes à un logement à paroi CMO conférant une rigidité structurelle à l'assemblage, selon le principe ci-dessus, les aubes comportant chacune un pied, ledit logement à paroi CMO et ledit composite de scellage coopérant pour sceller les pieds des aubes dans le logement.

Selon des modes particuliers de l'invention, l'étage de redresseur comporte au moins une ou une combinaison appropriée des caractéristiques suivantes:
- l'assemblage mécanique a la forme d'un anneau ou d'un secteur fixé à une virole extérieure de l'étage redresseur au moyen de fixations mécaniques ;
- les fixations mécaniques sont des lockbolts ;
- les aubes sont métalliques ou en matériau composite ;
- les aubes sont en titane ou en aluminium.

Un troisième objet de l'invention se rapporte à un compresseur de turbomachine comprenant un ou plusieurs étages de redresseur comme décrits ci-dessus.

### Brève description des figures

La figure 1 représente une vue en perspective d'un assemblage selon l'invention et les pièces concernées.

La figure 2 représente schématiquement l'assemblage composite de l'invention, par thermoformage suivi d'une surinjection, respectivement selon une vue de profil et une vue de face.

### Légende

1. Motif structural élémentaire
2. Profilé en U
3. Aube
3A. Pied d'aube
4. Matière de scellage

### Description d'une forme d'exécution préférée de l'invention

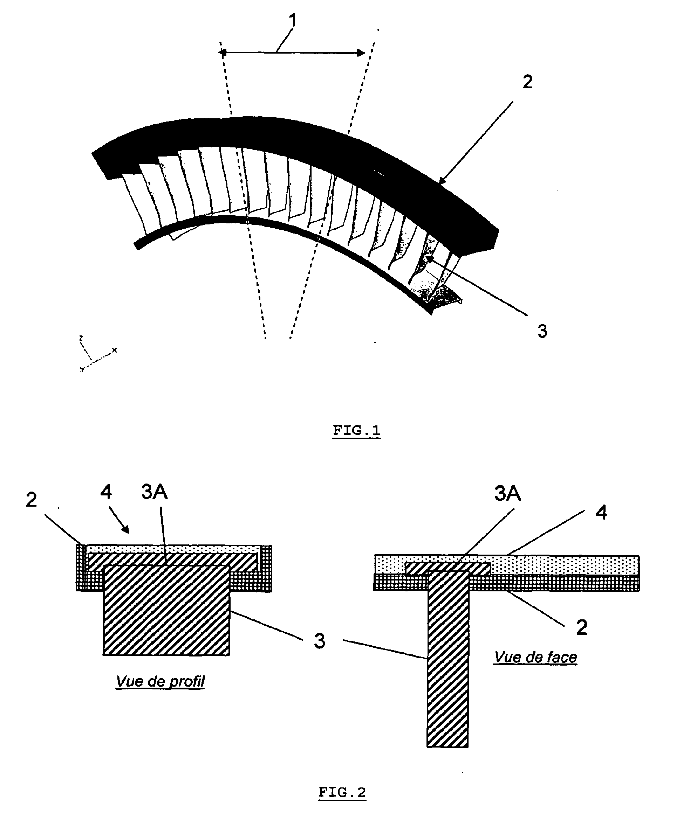

L'assemblage selon une modalité d'exécution préférée de la présente invention, dont le principe et les pièces en jeu sont représentés en perspective sur la figure 1, consiste essentiellement en un sous-ensemble 1 obtenu par un scellage de type mécanique entre :
- une pièce 2 de préférence profilée, de préférence encore en forme de « U », à base de matériau composite à matrice organique (CMO), thermodurcissable ou thermoplastique, conférant une rigidité structurelle à l'assemblage et
- une aube 3 de matière non spécifique a priori (métal ou composite) et possédant un pied dont la géométrie peut être variable ou adaptée aux besoins.
D'autres vues schématiques de cet assemblage sont montrées à la figure 2.

Selon la présente invention, le support composite à matrice thermodurcissable ou thermoplastique 2 peut être fabriqué par tout type de procédé permettant l'obtention de propriétés mécaniques suffisantes, comme par exemple : compression molding, injection de matrice thermoplastique ou thermodurcissable, par exemple RTM (*Resin transfer molding*), thermoformage ou co-consolidation, etc. L'invention n'est toutefois pas limitée à l'utilisation d'une pièce profilée 2, par exemple en « U ». Ainsi, un support plan peut également être envisagé.

Le composite de fixation par scellage ou composite de scellage ou matière de scellage 4 est à base de matrice thermodurcissable ou thermoplastique contenant entre 0 et 70% de fibres, par exemple ou de préférence courtes, et peut être mis en oeuvre par un procédé d'injection de matrice thermoplastique ou thermodurcissable ou par compression molding. Plus généralement, la charge peut être toute charge minérale ou organique appropriée. Ainsi, la matrice peut cependant être chargée (avec fibres) ou non chargée (matrice pure, 0% de fibres).

Toujours selon l'invention, c'est la géométrie particulière du pied de l'aube 3A qui assure son positionnement et son maintien dans la structure (figure 2). Les aubes 3 étant scellées, le pied d'aube 3A est alors noyé par le composite de fixation 4 mentionné ci-dessus, qui effectue par exemple un remplissage de la pièce profilée 2 et assure ainsi le maintien de l'aube 3.

La technique de scellage ou d'assemblage utilisée selon un mode d'exécution préféré de l'invention pour des aubes en métal 3 est illustrée plus particulièrement et très schématiquement sur la figure 2. La pièce structurale ou structure porteuse 2 est assurée par une pièce profilée en « U » 2 réalisée en composite thermoplastique à fibres longues obtenu par thermoformage (l'ouverture du « U » est orientée vers l'extérieur par rapport à la pale).

De la résine thermoplastique chargée en fibres courtes 4 est injectée pour remplir le volume creux restant, une fois le pied d'aube 3A mis en place dans la structure porteuse 2.

De plus, afin de satisfaire au mieux les contraintes aérodynamiques, on surinjecte de la matière au niveau des zones ne permettant pas l'obtention de la géométrie par thermoformage (non représenté). Le remplissage au moyen de la matière de scellage pour réaliser la liaison mécanique et/ou physico-chimique est par exemple effectué dans un second temps ou, si cela est possible, en même temps que la réalisation de la partie structurale en composite.

Selon la présente invention, la matière du support composite en « U » 2 et la matière de scellage 4 sont identiques ou compatibles chimiquement (par exemple matériaux thermoplastiques de même nature), afin de réaliser une accroche chimique entre celles-ci. La liaison « matière » qui en résulte revient à ne réaliser au final qu'une seule pièce homogène, ce qui présente un avantage supplémentaire en termes de tenue mécanique de l'assemblage.

Selon encore un mode d'exécution préféré de l'invention, le sous-ensemble 1 appartenant à l'étage redresseur a la forme d'un anneau ou d'un secteur fixé à une virole extérieure ou un carter au moyen de fixations mécaniques, telles que des lockbolts (non représenté).

Si des problèmes de dilatation différentielle apparaissent, par exemple entre des secteurs aubagés, des pièces intermédiaires déformables ou non peuvent être insérées dans l'assemblage radialement ou circonférentiellement.

Les avantages du concept selon l'invention pour la réalisation de redresseurs de turbomachines sont les suivants :
- un gain en masse par rapport à l'état de l'art, de par l'utilisation de composites pour les carters et éventuellement pour les aubages et ;
- un coût de fabrication limité, dû à un nombre restreint de pièces et un assemblage aisé ;
- une réparabilité simplifiée et économique de la partie statique du booster (compresseur), un simple remplacement d'un secteur d'aubes étant beaucoup plus aisé que dans le cas des architectures actuelles les plus courantes (par exemple assemblage soudé en titane) ;
- la fabrication de pièces finies sans reprise après la sortie de moule.

## Revendications

1. Assemblage mécanique (1) dans le secteur aéronautique comprenant :
- une pièce comportant une extrémité apte à être fixée (3);
- un logement à paroi composite à matrice organique (CMO) (2) destiné à accueillir ladite pièce (3) ;
- un composite de scellage (4), réalisant une liaison mécanique et/ou physico-chimique entre ladite pièce (3) et le logement à paroi CMO (2) **caractérisé en ce que** le composite de scellage comprend une matière thermoplastique ou thermodurcissable chargée entre 0 et 70% en masse.

2. Assemblage selon la revendication 1, **caractérisé en ce que** ladite pièce (3) est une aube.

3. Assemblage selon la revendication 1, **caractérisé en ce que** ladite pièce (3) possède une extrémité dont la géométrie permet d'optimiser la liaison mécanique et/ou physico-chimique.

4. Assemblage selon la revendication 3, **caractérisé en ce que** ladite pièce (3) possède une géométrie en pied.

5. Assemblage selon la revendication 1, **caractérisé en ce que** le logement à paroi CMO (2) est un support profilé, de préférence en « U ».

6. Assemblage selon la revendication 1, **caractérisé en ce que** la matrice organique du logement (2) est en matière thermoplastique ou thermodurcissable.

7. Assemblage selon la revendication 1, **caractérisé en ce que** la matière du logement à paroi CMO (2) et celle du composite de scellage (4) sont identiques ou compatibles chimiquement, afin de réaliser une accroche chimique ou physico-chimique entre celles-ci.

8. Assemblage selon la revendication 6, **caractérisé en ce que** le logement à paroi CMO (2) thermodurcissable ou thermoplastique est fabriqué par un procédé sélectionné dans le groupe constitué de compression molding, d'injection de matrice thermoplastique ou thermodurcissable, de thermoformage et de co-consolidation.

9. Assemblage selon la revendication 1, **caractérisé en ce que** le composite de scellage (4) est réalisé par un procédé sélectionné dans le groupe constitué d'injection de matrice thermoplastique ou thermodurcissable chargée ou non chargée et de compression molding.

10. Etage de redresseur pour compresseur de turbomachine comprenant un assemblage mécanique (1) d'une pluralité d'aubes (3) à un logement à paroi CMO (2) conférant une rigidité structurelle à l'assemblage, selon l'une quelconque des revendications précédentes, les aubes (3) comportant chacune un pied (3A), ledit logement à paroi CMO (2) et ledit composite de scellage (4) coopérant pour sceller les pieds (3A) des aubes (3) dans le logement (2).

11. Etage de redresseur selon la revendication 10, **caractérisé en ce que** l'assemblage mécanique (1) a la forme d'un anneau ou d'un secteur fixé à une virole extérieure de l'étage de redresseur au moyen de fixations mécaniques.

12. Etage de redresseur selon la revendication 11, **caractérisé en ce que** les fixations mécaniques sont des lockbolts.

13. Etage de redresseur selon la revendication 10, **caractérisé en ce que** les aubes (3) sont métalliques ou en matériau composite.

14. Etage de redresseur selon la revendication 13, **caractérisé en ce que** les aubes (3) sont en titane ou en aluminium.

15. Compresseur de turbomachine comprenant un ou plusieurs étages de redresseur selon l'une quelconque des revendications 10 à 14.

## Patentansprüche

1. Mechanische Montage (1) auf dem Gebiet der Luftfahrt, die umfasst:
- ein Teil, das ein Ende aufweist, das geeignet ist, befestigt zu sein (3),
- eine Aufnahme mit Verbundwand mit organischer Matrix (CMO) (2), die zur Aufnahme des Teils (3) bestimmt ist,
- ein Auflagerungsverbundmaterial (4), das eine mechanische und/oder physikalisch-chemische Verbindung zwischen dem Teil (3) und der Aufnahme mit CMO-Wand (2) herstellt, **dadurch gekennzeichnet, dass** das Auflagerungsverbundmaterial ein thermoplastisches oder duroplastisches Material umfasst, das zwischen 0 und 70 Massenprozent beschickt ist.

2. Montage nach Anspruch 1, **dadurch gekennzeichnet, dass** das Teil (3) eine Schaufel ist.

3. Montage nach Anspruch 1, **dadurch gekennzeichnet, dass** das Teil (3) ein Ende besitzt, dessen Geometrie die Optimierung der mechanischen und/oder physikalisch-chemischen Verbindung erlaubt.

4. Montage nach Anspruch 3, **dadurch gekennzeichnet, dass** das Teil (3) eine fußförmige Geometrie besitzt.

5. Montage nach Anspruch 1, **dadurch gekennzeichnet, dass** die Aufnahme mit CMO-Wand (2) ein Profilhalter, vorzugsweise in U-Form, ist.

6. Montage nach Anspruch 1, **dadurch gekennzeichnet, dass** die organische Matrix der Aufnahme (2) aus thermoplastischem oder duroplastischem Material ist.

7. Montage nach Anspruch 1, **dadurch gekennzeichnet, dass** das Material der Aufnahme mit CMO-Wand (2) und das des Auflageverbundmaterials (4) identisch oder chemisch kompatibel sind, um eine chemische oder physikalisch-chemische Anhaftung zwischen ihnen durchzuführen.

8. Montage nach Anspruch 6, **dadurch gekennzeichnet, dass** die duroplastische oder thermoplastische Aufnahme mit CMO-Wand (2) anhand eines Verfahrens hergestellt ist, das aus der Gruppe ausgewählt ist, die von dem Compression Molding, dem Spritzen thermoplastischer oder duroplastischer Matrix, dem Warmformen und dem Co-Konsolidieren gebildet wird.

9. Montage nach Anspruch 1, **dadurch gekennzeichnet, dass** das Auflagerungsverbundmaterial (4) anhand eines Verfahrens hergestellt ist, das aus der Gruppe ausgewählt ist, die vom Spritzen beschickter oder nicht beschickter thermoplastischer oder duroplastischer Matrix und dem Compression Molding gebildet wird.

10. Gleichrichterstufe für Turbotriebwerkskompressor, die eine mechanische Montage (1) einer Vielzahl von Schaufeln (3) in einer Aufnahme mit CMO-Wand (2) umfasst, die der Montage eine strukturelle Steifheit verleiht, nach einem der vorangehenden Ansprüche, wobei die Schaufeln (3) jeweils einen Fuß (3A) umfassen, wobei die Aufnahme mit CMO-Wand (2) und das Auflagerungsverbundmaterial (4) zusammenarbeiten, um die Füße (3A) der Schaufeln (3) in der Aufnahme (2) zu befestigen.

11. Gleichrichterstufe nach Anspruch 10, **dadurch gekennzeichnet, dass** die mechanische Montage (1) die Form eines Rings oder eines Sektors hat, der an einem Außenring der Gleichrichterstufe anhand mechanischer Befestigungen befestigt ist.

12. Gleichrichterstufe nach Anspruch 11, **dadurch gekennzeichnet, dass** die mechanischen Befestigungen Lockbolts sind.

13. Gleichrichterstufe nach Anspruch 10, **dadurch gekennzeichnet, dass** die Schaufeln (3) metallisch oder aus Verbundmaterial sind.

14. Gleichrichterstufe nach Anspruch 13, **dadurch gekennzeichnet, dass** die Schaufeln (3) aus Titan oder aus Aluminium sind.

15. Turbotriebwerkskompressor, der eine oder mehrere Gleichrichterstufen nach einem der Ansprüche 10 bis 14 umfasst.

## Claims

1. A mechanical assembly (1) in the aeronautics field comprising:
- a part (3) comprising an attachable end;
- a recess with a wall comprising an organic matrix composite (OMC) (2) for receiving the part (3);
- a sealing composite (4) forming a mechanical and/or physicochemical connection between said part (3) and the recess with the OMC wall (2), **characterised in that** the sealing composite comprises a thermoplastic or heat-sealable material with between 0 and 70 wt % of a filler.

2. The assembly according to Claim 1, **characterised in that** said part (3) is a blade.

3. The assembly according to Claim 1, **characterised in that** said part (3) comprises one end whose geometry allows to optimize the mechanical and/or physicochemical connection.

4. The assembly according to Claim 3, **characterised in that** said part (3) comprises a foot geometry.

5. The assembly according to Claim 1, **characterised in that** the recess with the OMC wall (2) is a profiled carrier, preferably in the shape of a "U".

6. The assembly according to Claim 1, **characterised in that** the organic matrix of the recess (2) is made of a thermoplastic or heat-sealable material.

7. The assembly according to Claim 1, **characterised in that** the material of the recess with the OMC wall (2) and that of the sealing composite (4) are identical or chemically compatible, so as to produce a chemical or physicochemical attachment between them.

8. The assembly according to Claim 6, **characterised in that** the recess with the heat-sealable or thermoplastic OMC wall (2) is produced by a method selected from the group consisting of compression moulding, injection of thermoplastic or heat-sealable matrix, heat sealing and co-consolidation.

9. The assembly according to Claim 1, **characterised in that** the sealing composite (4) to be injected is produced by a method selected from the group consisting of injection of a thermoplastic or heat-sealable matrix with or without filler, and of compression moulding.

10. A rectifier stage for a turbomachine compressor comprising a mechanical assembly (1) of a plurality of blades (3) with a housing having an OMC wall (2) imparting structural rigidity to the assembly, according to any one of the preceding claims, the blades (3) each comprising a foot (3A), said recess with an OMC wall (2) and said sealing composite (4) cooperating in order to seal the feet (3A) of the blades (3) in the recess (2).

11. The rectifier stage according to Claim 10, **characterised in that** the mechanical assembly (1) has the form of a ring or of a sector attached to an outer shroud of the rectifier stage by means of mechanical fasteners.

12. The rectifier stage according to Claim 11, **characterised in that** the mechanical fasteners are lock bolts.

13. The rectifier stage according to Claim 10, **characterised in that** the blades (3) are made of metal or composite material.

14. The rectifier stage according to Claim 13, **characterised in that** the blades (3) are made of titanium or aluminium.

15. A turbomachine compressor comprising one or more rectifier stages according to any one of Claims 10 to 14.
